# FASCICULE DE BREVET EUROPEEN

(11) **EP 2 083 662 B1**
(45) Date de publication et mention de la délivrance du brevet: **15.12.2010**
(21) Numéro de dépôt: 07820875.8
(22) Date de dépôt: 03.10.2007
(51) Int. Cl.: A47J 31/40

(54) **ENSEMBLE COMPORTANT UN APPAREIL ET UNE CAPSULE JETABLE POUR PRODUIRE UNE BOISSON PAR INFUSION, ET CAPSULE POUR UN TEL ENSEMBLE**
ANORDNUNG MIT EINEM GERÄT UND EINER EINWEGKAPSEL ZUR ZUBEREITUNG EINES BRÜHGETRÄNKS UND KAPSEL FÜR EINE DERARTIGE ANORDNUNG
ASSEMBLY COMPRISING AN APPLIANCE AND A DISPOSABLE CAPSULE FOR PRODUCING A BREWED DRINK, AND CAPSULE FOR SUCH AN ASSEMBLY

(30) Priorité: 17.10.2006 IT MI20061989
(43) Date de publication de la demande: 05.08.2009
(73) Titulaire: Samar Technologies Ltd., Neapoli, Limassol (CY)
(72) Inventeur: RICOTTI, Maddalena, 27045 Casteggio (Pavia) (IT)
(74) Mandataire: Delaveau, Sophie
(86) Numéro de dépôt international: PCT/EP2007/060498
(87) Numéro de publication internationale: WO 2008/046740

(56) Documents cités:
- EP-A- 1 721 553
- WO-A-2005/079639

## Description

### DOMAINE TECHNIQUE DE L'INVENTION

La présente invention concerne un ensemble comportant un appareil pour produire une infusion d'une boisson aromatique à partir d'une capsule jetable et au moins une capsule associée.

### ARRIERE PLAN TECHNIQUE DE L'INVENTION

Il existe de nos jours sur le marché des machines automatiques ou semi-automatiques dites "à café" qui comportent un groupe d'infusion qui comporte une chambre d'infusion, qui est apte à recevoir la capsule, et un piston pour la fermeture hermétique de la chambre d'infusion qui présentent un mouvement relatif entre une position d'ouverture et une position de fermeture de la chambre d'infusion.

Le groupe d'infusion doit avoir une fermeture précise, sûre et fiable, notamment pour garantir la résistance à la pression hydraulique quand le groupe d'infusion fonctionne sous pression, la production de café dit "espresso" par ce type d'appareil nécessitant une pression d'environ 9 bars.

La cinématique d'actionnement du groupe d'infusion nécessite par nature une structure et un fonctionnement complexes pour la fermeture hermétique et fiable de la chambre d'infusion, tout en permettant la mise en place de la capsule dans la chambre d'infusion et son évacuation hors de la chambre et du groupe d'infusion après la production de la dose de boisson correspondante.

D'autre part, les appareils ou machines à café actuelles offrent une flexibilité réduite d'utilisation dans la mesure ou elles ne se prêtent pas à la réalisation de boissons d'autres types, autres que le café, sinon avec une dépréciation des prestations, qui est notamment due à des phénomènes de pollution ou de contamination de certains des conduits, d'une boisson à l'autre.

Ceci est du au fait que, par exemple, les machines à café présentent de nos jours en général un circuit unique d'écoulement de la boisson sortant de la chambre d'infusion. Des machines à café de ce type sont décrites dans les publications WO 2005/079639 et EP 1 721 553. Il en résulte que des boissons extrêmement différentes, de par leurs nature, leurs compostions, leurs arômes, etc. suivent ce circuit unique avec le risque qu'une boisson soit contaminée par les résidus de la boisson produite lors du cycle de fonctionnement précédent de la machine. C'est par exemple le cas si on produit du thé après avoir produit du café, le circuit ou conduit d'écoulement de la boisson hors de la chambre d'infusion est le même pour l'écoulement du café, puis du thé.

La présente invention propose un ensemble d'infusion pour une machine de production de boissons par infusion, notamment de café qui permet d'éliminer les inconvénients techniques inhérents à la technique actuelle, notamment pour éviter les phénomènes de pollution évoqués ci-dessus et permettre successivement la production de boissons de types très différents, en maintenant des standards élevés de prestation, et en fournissant des boissons avec des propriétés organoleptiques optimales.

### RESUME DE L'INVENTION

Dans ce but, l'invention propose un ensemble selon la revendication 1.

D'autres caractéristiques sont définies aux revendications secondaires.

L'invention propose aussi une capsule apte à être reçue dans l'appareil d'un tel ensemble selon l'invention.

### BREVE DESRIPTION DES FIGURES

D'autres aspects et caractéristiques de la présente invention apparaîtront à la lecture de la description d'un mode de réalisation préféré, mais non exclusif, de l'appareil d'infusion suivant l'invention, qui est illustré à titre d'exemple non limitatif dans les dessins annexés dans lesquels :
- la figure 1 est une vue, en section axiale selon la ligne 1-1 de la figure 2, du groupe d'infusion (sans le levier de commande) selon la présente invention qui est illustré dans la position axiale arrière reculée du piston, correspondant à la position d'ouverture de la chambre d'infusion ;
- la figure 2 est une vue en plan de dessus du groupe d'infusion de la figure 1 ;
- la figure 3 est une vue en perspective du groupe d'infusion de la figure 1 qui est illustré avec le levier de commande ;
- la figure 4 est une vue latérale du groupe d'infusion de l'appareil selon l'invention qui est illustré dans la position axiale avant du piston correspondant à la position de fermeture hermétique de la chambre d'infusion ;
- la figure 5 est une section transversale du groupe d'infusion selon la ligne 5-5 de la figure 1 ;
- la figure 6 est une vue agrandie d'un détail des moyens de retenue de la capsule, qui sont entourés par un cercle à la figure 2 ;
- la figure 7 est une vue en perspective, de trois-quarts arrière, d'un premier type d'une capsule selon l'invention apte à être reçue dans la chambre d'infusion ;
- la figure 8 est une vue schématique en perspective qui illustre l'agencement intérieur de la chambre d'infusion selon l'invention ;
- la figure 9A est vue arrière du fonds transversal avant de la capsule de la figure 7 :
- la figure 9B est une vue schématique, en section axiale, qui illustre la capsule des figures 7 et 9A en position dans la chambre d'infusion ;
- les figures 10A et 10B sont des vues analogues à celles des figures 9A et 9B qui illustrent un deuxième type d'une capsule selon l'invention apte à être reçue dans la chambre d'infusion ;
- les figures 11A et 11B sont des vues analogues à celles des figures 9A et 9B qui illustrent un troisième type d'une capsule selon l'invention apte à être reçue dans la chambre d'infusion.

### DESCRIPTION DETAILLEE DES FIGURES

Dans la description qui va suivre, des éléments identiques, analogues ou similaires seront désignés par les mêmes chiffres de référence.

A titre non limitatif, on utilisera les termes vertical, longitudinal et transversal en référence au trièdre L, V, T indiqué aux figures dont les axes transversal T et longitudinal L sont situés dans le plan horizontal.

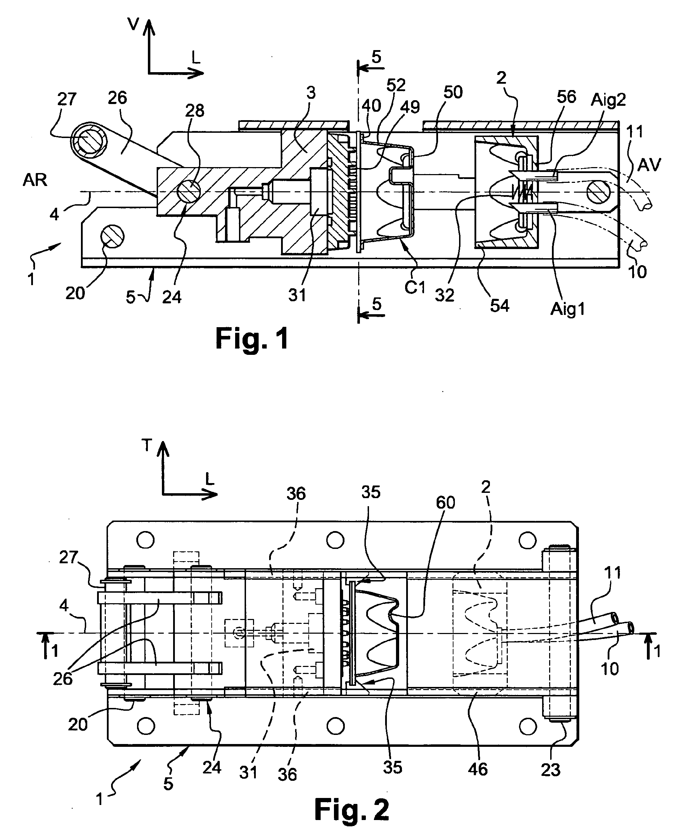

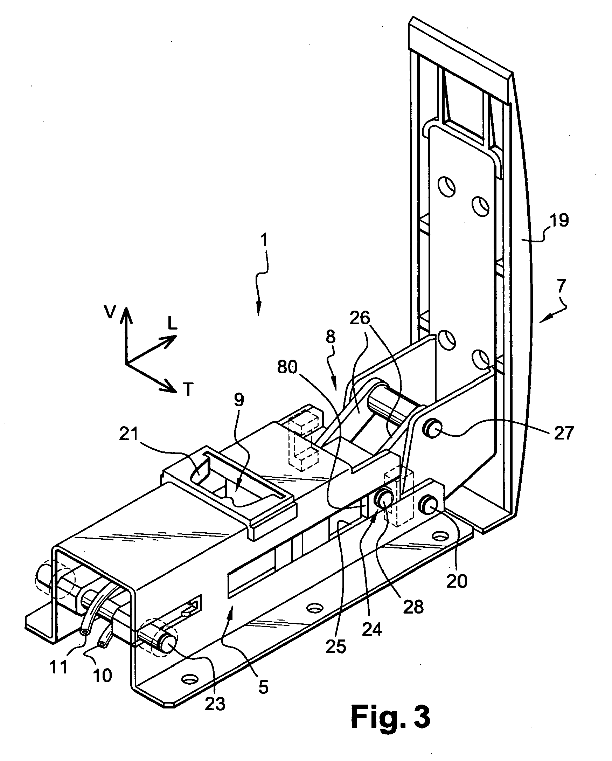

En se référant aux figures 1 à 6, on voit un appareil d'infusion pour un appareil ou machine à café désigné dans son ensemble par le chiffre de référence 1.

L'appareil d'infusion 1 comporte un groupe d'infusion constitué de deux composants principaux complémentaires que sont une chambre d'infusion 2 et un piston 3 de fermeture de la chambre d'infusion 2.

La chambre d'infusion 2 est destinée à recevoir et à loger une capsule Ci (C1, C2 ou C3) qui, comme illustré aux figures, est de préférence une capsule contenant la variété de café et/ou d'une quelconque autre essence aromatique destinée à l'infusion.

La chambre d'infusion 2 et le piston de fermeture 3 sont disposés coaxialement selon un axe 4 de translation (d'avant AV en arrière AR), le long duquel ils sont assujettis à un positionnement relatif entre une position dite d'ouverture et une position dite de fermeture de la chambre d'infusion 2.

L'appareil 1 comporte aussi un boîtier ou châssis principal 5.

Dans le cas particulier de l'exemple représenté et décrit, le piston de fermeture 3 est mobile par rapport au boîtier 5, tandis que la chambre d'infusion 2 est fixe, étant connectée rigidement au boîtier 5 qui sert de support et de guide aux deux principaux composants du groupe d'infusion.

Le boîtier 5, de forme générale parallélépipédique rectangle, s'étend horizontalement selon une direction longitudinale et parallèlement à l'axe longitudinal 4 de translation du piston mobile 3 par rapport à la chambre d'infusion fixe 2.

En variante (non représentée), on peut aussi concevoir que le piston de fermeture 3 soit fixe et que la chambre d'infusion 2 soit mobile, ou qu'ils soient mobiles tous les deux ensemble par rapport au boîtier 5.

L'appareil d'infusion 1 comporte des moyens rotatifs (c'est-à-dire pivotant dans les deux sens) 7 de commande du groupe d'infusion, et comporte des moyens 8 de transformation cinématique qui agissent pour convertir la rotation des moyens de commande 7 en un déplacement longitudinal relatif entre le piston de fermeture 3 et la chambre d'infusion 2, selon l'axe de translation 4.

L'appareil d'infusion 1 comporte d'autres moyens 9 de positionnement dit "obligatoire" de la capsule Ci dans la chambre d'infusion 2.

Plus précisément, il s'agit de garantir que, une fois introduite dans le groupe d'infusion, d'une manière qui sera décrite plus en détails par la suite, une capsule Ci conserve une position déterminée par rapport à la chambre d'infusion 2 dans laquelle elle va ensuite être reçue, et plus particulièrement ici une orientation angulaire constante de la capsule autour de son axe principal qui, lorsque la capsule est en position introduite dans le groupe d'(infusion), est un axe parallèle à l'axe de translation 4.

Conformément à l'invention, la chambre d'infusion 2 comporte une première et au moins une seconde voies distinctes V1 et V2 d'écoulement, tandis que le piston de fermeture présente une voie 31 d'introduction de l'eau chaude dans une capsule pour l'infusion.

Chaque voie d'écoulement V1 ou V2 est en permanence reliée à l'intérieur de la chambre d'infusion 2 et est apte à permettre l'écoulement de tout ou partie d'une boisson préparée, et ceci en fonction du type de capsule Ci utilisée.

On distinguera ainsi par la suite les capsules d'un premier type, dites C1, qui permettent la préparation d'une boisson (par exemple du café) qui s'écoule hors de la capsule C1 et de la chambre d'infusion 2, par la voie hydraulique V1, et seulement par cette dernière.

On distinguera aussi les capsules d'un deuxième type, dites C2, qui permettent la préparation d'une boisson d'un autre type (par exemple du thé ou du lait) qui s'écoule hors de la capsule C2 et de la chambre d'infusion 2, par la voie hydraulique V2, et seulement par cette dernière.

Selon une variante, on distinguera encore les capsules d'un troisième type dites C3 qui permettent la préparation d'une boisson qui s'écoule hors de la capsule C3 et de la chambre d'infusion 2, par les deux voies hydraulique V1 et V2, chaque voie pouvant alors participer à l'écoulement d'une seule et même boisson préparée à partir d'une même essence contenue dans la capsule C3, ou encore permettre l'écoulement, simultané ou décalé dans le temps, de deux composants liquides différents nécessaires à la préparation d'une même boisson à partir de deux essences différentes contenues dans deux compartiments séparés d'une capsule C3, c'est à dire par exemple du café par la voie V1 et du lait par la voie V2.

A cet effet, et comme cela sera expliqué par la suite, chaque capsule Ci d'un type particulier est apte à comporter dans son fond un orifice de sortie (T1 ou T2 dans le cas d'une capsule C1 ou C2) ou plusieurs orifices de sortie (ici deux orifices T1 et T2 dans le cas d'une capsule C3) qui, par effet du positionnement angulaire obligatoire de la capsule Ci dans la chambre d'infusion 2, sont affectés sélectivement à la première voie d'écoulement V1 ou/et à la deuxième voie d'écoulement V2 avec lesquelles ils sont alors mis en communication hydraulique.

La chambre d'infusion 2 se présente sous la forme d'un bol cylindrique de révolution coaxial à l'axe 4 qui est ouvert axialement vers l'arrière AR et qui est délimité vers l'arrière par un bord annulaire transversal 54. Ce corps en forme de bol de la chambre d'infusion 2 est délimitée axialement vers l'avant (AV) par une paroi transversale de fond 56 qui porte deux aiguilles creuses Aig1 et Aig2. Les deux aiguilles sont parallèles et s'étendent axialement vers l'arrière à l'intérieur de la chambre d'infusion 2.

Les deux aiguilles sont alignées selon un diamètre vertical de la chambre avec la première aiguille Aig1 en dessous de la deuxième aiguille Aig2.

La première aiguille Aig1 est reliée à une première conduite externe 10 de manière à constituer la première voie hydraulique V1, tandis que la deuxième aiguille Aig2 est reliée à une deuxième conduite externe 11 de manière à constituer la deuxième voie hydraulique, distincte de V1, en communication avec l'intérieur de la chambre d'infusion 2.

Entre les deux aiguilles, la paroi de fonds 56 de la chambre d'infusion 2, il est prévu un élément expulseur à ressort 32 qui est un ressort à boudin travaillant en compression qui est apte à fléchir élastiquement dans la direction parallèle à l'axe de translation 4 et vers l'avant pour être comprimé et emmagasiner de l'énergie élastique lorsque une capsule Ci est en place dans la chambre d'infusion 2.

L'expulseur à ressort 32 présente, au repos et selon la direction longitudinale, une longueur qui est déterminée pour garantir l'expulsion axiale de la capsule hors de la chambre 2 après utilisation.

On décrira maintenant en détails les principales caractéristiques communes à toutes les capsules Ci, c'est à dire quel que soit leur type.

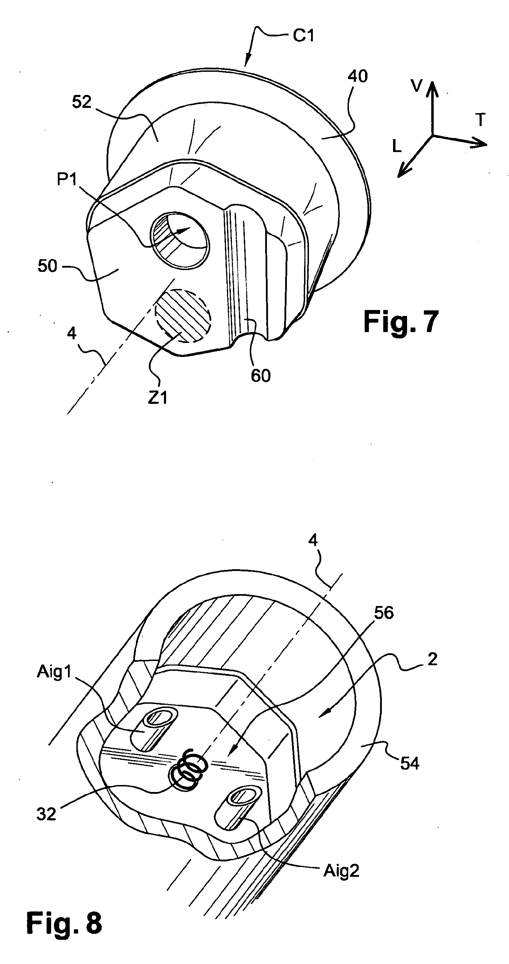

Comme on peut le voir à la figure 7, chaque capsule Ci est de forme générale prismatique tronconique. Elle est réalisée par exemple par moulage en matière plastique et elle est délimitée par une paroi latérale 52 et axialement vers l'avant par une paroi transversale de fond 50 qui est ici de contour hexagonal.

La paroi latérale 52 est délimitée axialement vers l'arrière par un bord annulaire 40 qui s'étend radialement vers l'extérieur dans un plan transversal. La face arrière ouverte de la capsule permettant son remplissage initial avec une essence à infuser, par exemple en poudre, est fermée par un film 51 qui constitue la paroi transversale arrière de la capsule à travers laquelle l'eau d'infusion peut être introduite dans la capsule Ci.

La paroi de fond 50 comporte une rainure 60 à section en U qui s'étend parallèlement à un diamètre et qui est décalée latéralement par rapport à l'axe central 4' de la capsule. La rainure 60 constitue la cavité de détrompage en vue de réaliser le positionnement obligatoire et univoque de la capsule dans le groupe d'infusion, et donc dans la chambre d'infusion 2.

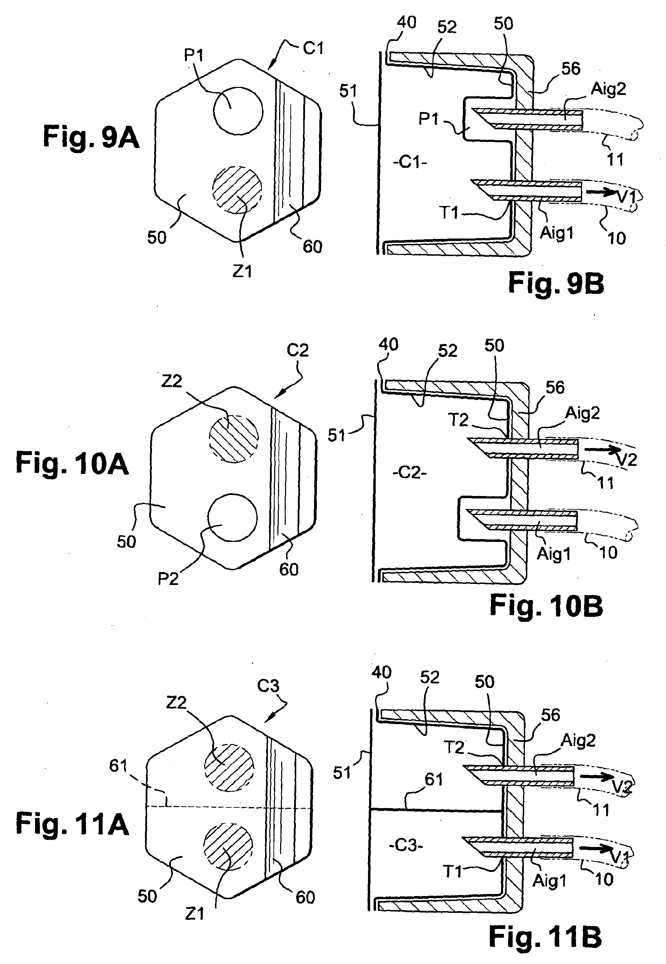

Plus précisément, la capsule illustrée à la figure 7 et à la figure 10A est une capsule C1 du premier type dont la paroi avant de fond 50 comporte, alignées verticalement sensiblement selon un "diamètre", une portion, ou zone, inférieure pleine Z1 de la paroi qui, lorsque la capsule est en place dans la chambre d'infusion 2, est apte à être percée par l'aiguille Aig1 pour constituer un orifice, ou trou, T1 d'écoulement de la boisson hors de la capsule C1.

En partie "haute", au-dessus de la portion Z1, la paroi avant de fond 50 comporte une portion P1, réalisée par moulage avec la paroi 50, qui est en forme d'un puits qui s'étend axialement vers l'arrière à l'intérieur de la capsule pour constituer une portion qui n'est pas apte à être perforée par la deuxième aiguille Aig2 lorsque la capsule C1 est dans la chambre d'infusion (figure 9B).

Bien entendu, la position et l'orientation angulaire de la capsule à l'intérieur de la chambre 2 sont telles que l'aiguille Aig1 est alignée axialement avec la portion Z1 et l'aiguille Aig2 est alignée axialement avec le puits P1 à l'intérieur duquel elle est reçue sans perforer la capsule C1.

En position de préparation de la boisson, comme illustré à la figure 9B, c'est la voie hydraulique V1 qui est utile pour l'évacuation de la boisson hors de la chambre d'infusion 2 de la capsule C1.

La capsule illustrée schématiquement à la figure 10A et à la figure 10B est une capsule C2 du deuxième type dont la paroi avant de fond 50 comporte, alignées verticalement sensiblement selon un "diamètre", une portion, ou zone, supérieure pleine Z2 de la paroi qui, lorsque la capsule est en place dans la chambre d'infusion 2, est apte à être percée par l'aiguille Aig2 pour constituer un orifice, ou trou, T2 d'écoulement de la boisson hors de la capsule C2.

En partie "basse", au-dessous de la portion Z2, la paroi avant de fond 50 comporte une portion P2, réalisée par moulage avec la paroi 50, qui est en forme d'un puits qui s'étend axialement vers l'arrière à l'intérieur de la capsule C2 pour constituer une portion qui n'est pas apte à être perforée par la première aiguille Aig1 lorsque la capsule C2 est dans la chambre d'infusion 2.

En position de préparation de la boisson, comme illustré à la figure 10B, c'est la deuxième voie hydraulique V2 qui est utile pour l'évacuation de la boisson hors de la chambre d'infusion 2.

La capsule illustrée schématiquement à la figure 11A et à la figure 11B est une capsule C3 dite du troisième type dont la paroi avant de fond 50 comporté, alignées verticalement sensiblement selon un "diamètre", une portion, ou zone, inférieure pleine Z1 de la paroi qui, lorsque la capsule C3 est en place dans la chambre d'infusion 2, est apte à être percée par l'aiguille Aig1 pour constituer un premier orifice, ou trou, T1 d'écoulement de la boisson hors de la capsule C3 selon la voie V1, et - au-dessus de la zone supérieure pleine Z1, une zone supérieure pleine Z2 de la paroi qui, lorsque la capsule C3 est en place dans la chambre d'infusion 2, est apte à être percée par l'aiguille Aig2 pour constituer un deuxième orifice, ou trou, T2 d'écoulement de la boisson hors de la capsule C3 selon la voie V2.

Ainsi la paroi 50 d'une capsule C3 est apte à être percée simultanément par les deux aiguilles Aig1 et Aig2 et les deux voies hydrauliques V1 et V2 sont utilisées simultanément pour l'écoulement du liquide infusé contenu dans la capsule C3. La capsule C3 peut comporter (comme illustré aux figures 11A et 11B) une cloison intérieure axiale et diamétrale 61 permettant d'infuser simultanément deux liquides de composition différentes dont chacun s'écoule hors de la capsule par une voie hydraulique associée.

On décrira maintenant en détails les moyens de positionnement angulaire obligatoire d'une capsule Ci, qui sont les mêmes quel que soit le type de la capsule Ci utilisé.

Ces moyens, dits aussi de détrompage, sont ici des moyens dits par coopérations de formes complémentaires qui comportent la cavité en forme de rainure 60 de la capsule Ci, présente dans le fond de cette dernière et la saillie en relief 18 formée de manière complémentaire dans le boîtier 5 qui entoure le groupe d'infusion.

La paroi supérieure du boîtier 5 comporte à cet effet une ouverture profilée 21 de chargement d'une capsule Ci selon un mode tel que celle-ci est ici chargée verticalement par introduction, de haut en bas, en déterminant une seule orientation possible de la cartouche par rapport au boîtier 5, et donc par rapport au piston 3 et à la chambre 2, de manière que la cartouche introduite ne puisse l'être que selon une position et une orientation uniques.

Ainsi, quel que soit le type de cartouche Ci, l'utilisateur met - "sans réfléchir" en fonction du type de cartouche - une cartouche Ci verticalement et correctement dans l'ouverture 21, et dans la chambre 2 (comme on le comprendra par la suite), grâce aux formes complémentaires de l'ouverture 21 de chargement avec sa saillie verticale 9 et de la capsule Ci*.

Les moyens 7 de commande en rotation comportent un levier principal de commande 19, aussi appelé levier d'actionnement ou d'entraînement du piston de fermeture 3, en coulissement axial dans les deux sens du piston 3 par rapport au boîtier 5 et par rapport à la chambre d'infusion fixe 2.

Au voisinage de son extrémité longitudinale arrière, le levier de commande 19 est monté articulé en rotation sur le boîtier 5, autour d'un axe de pivotement 20 qui est transversal et horizontal.

Le premier axe d'articulation 20 est ainsi orthogonal à l'axe de translation 4 du piston 3 par rapport à la chambre d'infusion 2.

L'axe de translation 4 et le premier axe d'articulation 20 sont tous les deux horizontaux, mais l'axe d'articulation 20 est ici décalé verticalement vers le bas par rapport à l'axe de translation 4 (voir figure 1).

Dans la solution décrite, la chambre d'infusion fixe 2 est rapportée sur le boîtier et elle est fixée à l'extrémité longitudinale avant du boîtier 5 au moyen d'une tige transversale de fixation 23 qui traverse deux portions opposées en vis-à-vis des parois latérales verticales du boîtier 5 et qui traverse deux portions correspondantes du corps de la chambre d'infusion.

Le piston mobile de fermeture 3 est lié rigidement à une tige transversale et horizontale d'entraînement 24 dont les extrémités opposées sont guidées en translation axiale (longitudinale) dans les deux sens d'entraînement du piston, grâce à deux lumière parallèles et opposées 25 du boîtier 5 qui s'étendent longitudinalement dans les parois latérales verticales opposées du boîtier 5, parallèlement à l'axe de translation 4.

A cet effet, chaque extrémité de la tige 24 est reçue dans un patin 80 de guidage associé du piston qui s'étend extérieurement le long du corps du piston 3.

Sous l'action du le levier de commande 19 qui est articulé, au voisinage de son extrémité longitudinale arrière, sur le boîtier 5, le piston de fermeture 3 est apte à se déplacer longitudinalement à l'intérieur et par rapport au boîtier 5 vers et depuis la chambre d'infusion 2, en se déplaçant et en se positionnant par rapport à l'ouverture de chargement 21.

Le piston de fermeture 3 est ainsi apte à occuper une position axiale arrière dite d'ouverture dans la quelle il est situé axialement en arrière de l'ouverture de chargement 21 de façon à permettre la mise ne place d'une capsule Ci neuve, et une position axiale avant de fermeture hermétique de la chambre d'infusion 2.

Les dimensions et positions des différents composants est ainsi telle que l'ouverture de chargement 21 est située axialement entre la position arrière d'ouverture du piston 3 et la chambre d'infusion fixe 2.

Les moyens 8 de transformation cinématique du pivotement dans les deux sens du levier 19 par rapport au boîtier 5, en un mouvement de coulissement axial du piston 3 le long de l'axe 4 comprennent au moins une ici une paires de bielles parallèles 26 de liaison entre le levier 19 et le piston de fermeture 3.

L'extrémité longitudinale arrière de chaque bielle 26 est reliée et est articulée sur le levier de commande 19 au moyen d'un deuxième axe d'articulation 27 qui est parallèle au premier axe d'articulation 20.

L'extrémité longitudinale avant de chaque bielle 26 est reliée et articulée sur la tige 24 qui joue ainsi aussi le rôle d'un troisième axe 28 d'articulation des bielles 26 sur l'équipage mobile (par rapport au boîtier 5) que constitue le piston 3.

Le deuxième 27 et le troisième 28 axes d'articulation sont parallèles au premier axe d'articulation 20, dont il résulte qu'ils sont ainsi horizontaux et orthogonaux à l'axe de translation 4.

Le piston de fermeture 3 porte des moyens 35 dits de "préhension" de la capsule Ci, comprenant aux extrémités opposées du diamètre du piston de fermeture 3, deux bras élastiques 36 s'étendant parallèlement à l'axe de translation 4. Ces moyens de préhension sont mobiles axialement dans les deux sens avec le piston 3 et par rapporta au boîtier 5 et donc par rapport à la chambre d'infusion 2.

Une extrémité arrière de chacun des bras 36 est fixée au piston de fermeture 3, tandis qu'une extrémité avant, éloignée de la tête du piston de fermeture 3, comporte une mâchoire 37 de préhension et de retenue du bord périphérique arrière 40 de la capsule Ci.

Chaque mâchoire 37 comporte un logement ou puits 45 délimité par des parois latérales opposées et parallèles 38 qui sont espacées d'une distance correspondant sensiblement à l'épaisseur du bord 40 de la capsule Ci qu'il doit recevoir, et par une paroi de fond curviligne 39 dite d'interception d'une capsule Ci lorsque elle est introduite en chute libre dans l'ouverture de chargement 21.

Chaque mâchoire 37 comporte de plus un plan incliné 48 pour la libération ultérieure d'une capsule Ci initialement retenue.

La chambre d'infusion 2 porte extérieurement, sur la trajectoire du plan incliné 48 de chaque mâchoire 37, un plan incliné 46 "de rencontre" avec la même inclinaison que celle du plan 48.

Le levier de commande 19 comporte une première butée de rotation en correspondance avec la position d'ouverture et une seconde butée de rotation correspondant à la position de fermeture de la chambre d'infusion 2.

Les butées de rotation (non représentées) sont réalisées à titre d'exemple au moyen de saillies appropriées de l'enveloppe du boîtier 5.

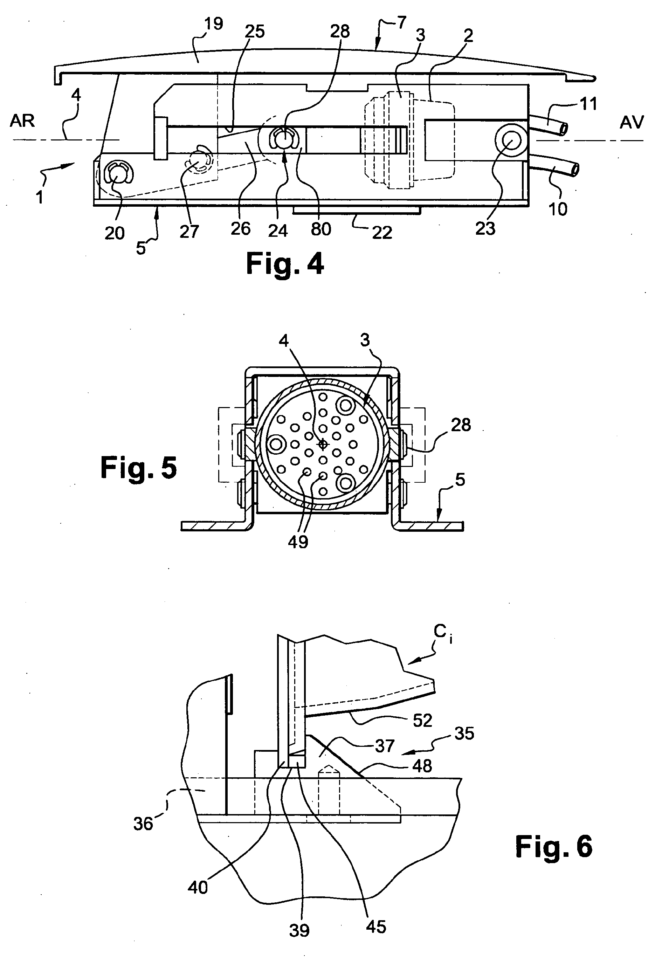

De préférence, le levier 19 de commande se prolonge en longueur par une plaque dont la longueur axiale est non inférieure à la longueur du boîtier 5 (voir figure 4) et qui, en correspondance avec sa position de fermeture, s'étend alors au-dessus de l'ouverture 21 de chargement, qui est ainsi entièrement recouverte pour éviter que, dans cette configuration du groupe d'infusion, il soit possible de charger une nouvelle capsule Ci.

En particulier, la dimension et/ou la forme et/ou le poids du levier de commande 19 peuvent être calibrés selon un mode tel que, dans sa position de fermeture, il est appliqué au levier de commande 19 un moment additionnel de verrouillage pour la sécurité de la fermeture de la chambre d'infusion 2 par le piston de fermeture 3.

La méthode d'actionnement du groupe d'infusion comporte l'actionnement manuel en pivotement du levier de commande 19, et la transformation de ce pivotement du levier de commande 19 en une translation du piston 3, avec ses bras 36 entre une position arrière d'ouverture et une position avant de fermeture étanche de la chambre d'infusion 2.

En particulier, avec le levier de commande 19 en position d'ouverture, il est possible de procéder au chargement, avec l'orientation correcte, d'une capsule Ci à travers l'ouverture de chargement 21.

La chute libre de la capsule Ci se termine quand son bord 40 est intercepté par les parois curvilignes de fond 39 des puits 45 dans lesquels la capsule Ci vient s'insérer verticalement.

Les parois latérales opposées 38 des puits 45 guident et entraînent la capsule Ci durant la translation axiale qui suit du piston de fermeture 3 qui est provoquée par le pivotement du levier de commande 19.

La course de fermeture du piston de fermeture 3 comporte un premier trajet d'avancement au cours duquel le piston de fermeture 3 pénètre à l'intérieur de la chambre d'infusion jusqu'à une fin du trajet d'avancement, et un deuxième trajet de recul au cours duquel le piston de fermeture recule légèrement depuis la fin du trajet d'avancement à la fin duquel le levier de commande est intercepté par la deuxième butée de rotation.

L'ouverture de l'angle formé par le premier, le deuxième et le troisième axes d'articulation 20, 27 et 28, dans le plan qui leur est orthogonal, varie entre la position d'ouverture et la position de fermeture de la chambre d'infusion 2.

Dans ce mode, la pression qui se crée en utilisation à l'intérieur de la chambre d'infusion, produit sur le piston de fermeture 3 une force de poussée qui, une fois transmise au levier de commande 19, est encaissée par la deuxième butée de rotation, et qui ne peut ainsi plus produire de pivotement du levier de commande 19 dans le sens d'ouverture de la chambre d'infusion 2.

Au contraire, pour l'ouverture de la chambre d'infusion 2, il est nécessaire d'exercer sur le piston de fermeture 3 une force de poussée dans une direction opposée à celle qu'exerce la pression interne à la chambre d'infusion 2.

En correspondance avec la fin de la course de fermeture du piston de fermeture 3, le plan 46 de rencontre, vient coopérer en appui axial avec le plan incliné 48 auquel il transmet une force de poussée qui, ayant une composante radiale par rapport à l'axe de translation 4, vers l'extérieur en éloignement l'une de l'autre des deux mâchoires. Ceci provoque une déformation élastique radiale des bras 36 qui permet le désengagement du bord 40 de la capsule Ci hors du puits 45 des mâchoires 37.

Simultanément, l'expulseur 32 se comprime grâce à la force d'écrasement exercée sur celui-ci par la capsule Ci et appliquée à celle-ci par le piston de fermeture 3.

Simultanément, les pointes 49 dont est munie la face frontale du piston de fermeture 3, perforent le couvercle 51 de la capsule Ci pour ouvrir un chemin d'accès pour l'eau chaude à l'intérieur de cette même capsule Ci.

Après l'infusion, quand le levier de commande est entraîné en rotation en ouverture, le piston de fermeture 3 recule sans la capsule Ci qui s'est précédemment libérée comme cela sera décrit plus loin.

Simultanément, l'expulseur 32 se détend, lorsque disparaît la force d'écrasement, et repousse la capsule Ci loin de la chambre d'infusion 2 en la précipitant vers l'ouverture inférieure 22 d'évacuation de la capsule hors du boîtier 5.

Le groupe d'infusion selon la présente invention est ainsi en mesure de garantir une fermeture précise, sure et fiable et une résistance hydraulique idoine aussi quand il fonctionne sous pression, ainsi qu'une flexibilité élevée de production et une qualité du produit obtenues, grâce à l'agencement de plusieurs voies d'écoulement hors de la chambre d'infusion qui sont mises en oeuvre de manière sélective du fait du type de capsule utilisé, et ainsi le produit est obtenu dans un mode tel que l'on évite la contamination d'un produit avec les résidus d'un produit de nature différente.

L'appareil pour la production d'une infusion d'une boisson aromatique avec cette conception est susceptible de nombreuses modifications et variantes dans le cadre de la présente invention.

Naturellement tous les composants peuvent être remplacés par des éléments techniquement équivalents.

En pratique, les matériaux utilisés, ainsi que les dimensions, peuvent être modifiés en fonction des exigences et de l'état de la technique.

## Revendications

1. Ensemble comportant un appareil (1) pour produire une infusion d'une boisson aromatique à partir d'une capsule jetable (Ci) contenant au moins une essence aromatique à infuser et comportant au moins une capsule jetable (Ci) dont une portion est apte à comporter au moins un orifice (T1, T2) de sortie de la boisson hors de la capsule, **caractérisé en ce que** l'appareil (1) est du type comportant :
- un groupe d'infusion formé d'une part d'une chambre d'infusion (2) apte à recevoir une capsule et d'autre part d'un piston (3) de fermeture de la chambre d'infusion, ce piston (3) étant monté mobile axialement (4) entre une position axiale arrière (AR) d'ouverture permettant notamment la mise en place d'une capsule neuve (C1, C2, C3) dans l'appareil et une position axiale avant (AV) de fermeture de la chambre (2) contenant la capsule neuve, ce piston (3) étant apte à déplacer axialement la capsule d'arrière en avant par rapport à la chambre d'infusion (2) lors de sa course axiale de fermeture de la chambre d'infusion (2) ;
- des moyens (21, 9, 60) de détrompage et de positionnement obligatoire univoque de la capsule (Ci) en position d'infusion à l'intérieur de la chambre d'infusion (2) ;
- une première voie hydraulique (V1) d'écoulement de la boisson qui est apte à être reliée à un premier orifice (T1) de la capsule (C1, C3), à travers la chambre d'infusion ; et
- une deuxième voie hydraulique (V2) d'écoulement de la boisson, distincte hydrauliquement de la première voie hydraulique (V1), qui est apte à être reliée à un deuxième orifice (T2) de la capsule (C2, C3), à travers la chambre d'infusion.

2. Ensemble selon la revendication 1, **caractérisé en ce que** :
- la chambre d'infusion (2) comporte une première aiguille creuse (Aig1) qui appartient à la première voie hydraulique d'écoulement (V1) et dont l'extrémité libre est apte à perforer ladite portion (Z1) d'une capsule neuve (C1, C3) pour y réaliser un premier orifice (T1) de sortie de la boisson hors de la capsule (C1, C3), lorsque cette capsule est déplacée par le piston de fermeture (3), axialement d'arrière en avant par rapport à la chambre d'infusion (2) ;
- la chambre d'infusion (2) comporte une deuxième aiguille creuse (Aig2) qui appartient à la deuxième voie hydraulique d'écoulement (V2) et dont l'extrémité libre est apte à perforer ladite portion (Z2) d'une capsule neuve (C2, C3) pour y réaliser un deuxième orifice (T2) de sortie de la boisson hors de la capsule (C2, C3), lorsque cette capsule est déplacée par le piston de fermeture (3), axialement d'arrière en avant par rapport à la chambre d'infusion (2) ;
et **en ce que** ladite capsule comporte une première portion (Z1) de paroi qui s'étend en regard de l'extrémité libre de la première aiguille creuse (Aig1) et qui est apte à être perforée par l'extrémité libre de cette première aiguille creuse (Aig1), de manière à établir un premier trajet d'écoulement de la boisson hors de la capsule (C1, C3) via ladite première voie hydraulique d'écoulement (V1), et/ou comporte une deuxième portion (Z2) de paroi qui s'étend en regard de l'extrémité libre de ladite deuxième aiguille creuse (Aig2) et qui est apte à être perforée par l'extrémité libre de la deuxième aiguille creuse (Aig2), de manière à établir un deuxième trajet d'écoulement de la boisson hors de la capsule (C2, C3) via la deuxième voie hydraulique d'écoulement (V2).

3. Ensemble selon la revendication 2, **caractérisé en ce que** ladite capsule (C1) comporte une portion de paroi (P1) qui s'étend en regard de l'extrémité libre de la deuxième (Aig2) desdites deux aiguilles creuses (Aig1, Aig2) et qui est apte à ne pas être perforée par l'extrémité libre de cette deuxième aiguille creuse de manière à ne pas établir un trajet d'écoulement de la boisson hors de la capsule via la deuxième voie hydraulique d'écoulement (V2) à laquelle appartient ladite deuxième aiguille creuse (Aig2), ou **en ce que** ladite capsule (C2) comporte au moins une portion de paroi (P2) qui s'étend en regard de l'extrémité libre de la première (Aig1) desdites deux aiguilles creuses (Aig1, Aig2) et qui est apte à ne pas être perforée par l'extrémité libre de cette première aiguille creuse de manière à ne pas établir un trajet d'écoulement de la boisson hors de la capsule via la première voie hydraulique d'écoulement (V1) à laquelle appartient ladite première aiguille creuse (Aig1).

4. Ensemble selon l'une des revendications 2 ou 3, **caractérisé en ce que** la première aiguille (Aig1) et la deuxième aiguille (Aig2) creuses s'étendent axialement d'avant en arrière à l'intérieur de la chambre d'infusion, **en ce que** la capsule (C1, C2, C3) comporte une paroi transversale avant (50) de fond, et **en ce que** chaque dite portion de paroi (Z1, Z2) apte à être perforée est une portion de ladite paroi transversale de fond (50).

5. Ensemble selon la revendication 4, **caractérisé en ce que** chaque dite portion de paroi (P1, P2) apte à ne pas être perforée est une portion de ladite paroi transversale de fond (50) qui est conformée en un puits qui s'étend axialement d'avant en arrière vers l'intérieur de la capsule (C1, C2, C3).

6. Ensemble selon l'une quelconque des revendications précédentes, **caractérisé en ce que** le piston de fermeture (3) porte des moyens (36, 37) de préhension d'une capsule (Ci) de manière à maintenir la capsule dans ladite position univoque par rapport au piston (3) et à déplacer axialement la capsule (Ci) d'arrière en avant lors de la course axiale de fermeture de la chambre (2) par le piston (3).

7. Ensemble selon la revendication précédente prise en combinaison avec la revendication 2, **caractérisé en ce que**, en position axiale avant de fermeture de la chambre d'infusion, le piston (3) enferme une capsule (C1, C2, C3) dans la chambre d'infusion (2), et **en ce que** au moins une desdites portions (Z1, Z2) aptes à être perforée est perforée par une aiguille creuse associée (Aig 1, Aig2).

8. Ensemble selon la revendication 4, **caractérisé en ce que** la capsule (Ci) est globalement en forme d'un tronc de cône et est délimitée axialement vers l'avant par ladite paroi transversale de fond (50) et vers l'arrière par une paroi transversale avant (51) qui constitue une face d'introduction du liquide d'infusion dans la capsule (Ci), et **en ce que** l'axe de la capsule tronconique est parallèle à l'axe (4) de déplacement du piston (3) lorsque la capsule est en position d'infusion dans la chambre d'infusion (2).

9. Ensemble d'infusion selon la revendication 1, **caractérisé en ce qu'**il comporte des moyens (19) pivotants de commande du groupe d'infusion, et des moyens (26) de transformation cinématique aptes à transformer un pivotement desdits moyens de commande en un déplacement relatif du piston (3) par rapport à la chambre (2), le long dudit axe de translation (4).

10. Ensemble d'infusion selon la revendication 1, **caractérisé en ce que** lesdits moyens de positionnement sont des moyens par coopération de formes complémentaires (21, 9 et 60) comportant une cavité (60) de la capsule (Ci) dont la forme est complémentaire de celle d'une saillie (9) en relief.

11. Ensemble selon la revendication 10 prise en combinaison avec la revendication 4, **caractérisé par le fait que** ladite cavité (60) est formée dans ladite paroi de fond (50) de la capsule.

12. Ensemble d'infusion selon la revendication 10, **caractérisé en ce qu'**il comporte un boîtier (5) qui loge le groupe d'infusion, et **en ce que** le boîtier comporte une ouverture supérieure (21) de chargement d'une capsule et une ouverture inférieure (22) d'évacuation de ladite capsule.

13. Ensemble d'infusion selon la revendication 1, **caractérisé par le fait que** ledit piston de fermeture (3) porte des moyens de préhension d'une capsule.

14. Ensemble d'infusion selon la revendication 13, **caractérisé en ce que** lesdits moyens de préhension comportent, à deux extrémités opposées d'un diamètre horizontal du piston de fermeture, deux bras élastiques (36) qui s'étendent parallèlement audit axe de translation (4).

15. Ensemble d'infusion selon la revendication 14, **caractérisé en ce que** l'extrémité avant de chaque bras comporte une mâchoire (37) de retenue et de préhension d'un bord arrière d'une capsule.

16. Ensemble d'infusion selon la revendication 15, **caractérisé en ce** chaque mâchoire (37) comporte un plan incliné pour la libération du verrouillage de ladite capsule, et que ladite chambre d'infusion présente sur la trajectoire dudit plan incliné, un plan correspondant de rencontre avec la même inclinaison.

17. Capsule apte à être reçue dans un appareil d'un ensemble selon l'une quelconque des revendications précédentes, **caractérisée en ce qu'**elle comprend une portion apte à comporter un premier orifice susceptible d'être relié à la première voie hydraulique (V1) d'écoulement de la boisson du dit ensemble et/ou à comporter un deuxième orifice susceptible d'être relié à la deuxième voie hydraulique (V2) d'écoulement de la boisson du dit ensemble,
et **en ce que** le corps de la dite capsule est réalisé par moulage en matrice plastique.

## Claims

1. Assembly comprising a device (1) for producing an infusion of an aromatic drink from a disposable capsule (Ci) containing at least one aromatic essence to be infused and comprising at least one disposable capsule (Ci) of which a portion is capable of comprising at least one orifice (T1, T2) for the drink to come out of the capsule, **characterized in that** the device (1) is of the type comprising:
- an infusion group formed on the one hand of an infusion chamber (2) capable of receiving a capsule and, on the other hand, of a piston (3) for closing the infusion chamber, this piston (3) being mounted so as to be able to move axially (4) between an open rear (AR) axial position making it possible notably to put in place a new capsule (C1, C2, C3) in the device and a closed front (AV) axial position of the chamber (2) containing the new capsule, this piston (3) being capable of moving the capsule axially from rear to front relative to the infusion chamber (2) during its axial travel for closing the infusion chamber (2);
- means (21, 9, 60) for preventing errors and for obligatory one-way only positioning of the capsule (Ci) in the infusion position inside the infusion chamber (2);
- a first hydraulic path (V1) for the flow of the drink which is capable of being linked to a first orifice (T1) of the capsule (C1, C3), through the infusion chamber; and
- a second hydraulic path (V2) for the flow of the drink, hydraulically distinct from the first hydraulic path (V1), which is capable of being connected to a second orifice (T2) of the capsule (C2, C3), through the infusion chamber.

2. Assembly according to Claim 1, **characterized in that**:
- the infusion chamber (2) comprises a first hollow needle (Aig1) which belongs to the first hydraulic path (V1) of flow and of which the free end is capable of perforating the said portion (Z1) of a new capsule (C1, C3) in order to produce therein a first orifice (T1) for the drink to come out of the capsule (C1, C3), when this capsule is moved by the closure piston (3), axially from rear to front relative to the infusion chamber (2);
- the infusion chamber (2) comprises a second hollow needle (Aig2) which belongs to the second hydraulic path (V2) of flow and of which the free end is capable of perforating the said portion (Z2) of a new capsule (C2, C3) in order to produce therein a second orifice (T2) for the drink to come out of the capsule (C2, C3), when this capsule is moved by the closure piston (3), axially from rear to front relative to the infusion chamber (2);
and **in that** the said capsule comprises a first portion (Z1) of wall which extends opposite the free end of the first hollow needle (Aig1) and which is capable of being perforated by the free end of this first hollow needle (Aig1), so as to establish a first path for the drink to flow out of the capsule (C1, C3) via the said first hydraulic path (V1) of flow, and/or comprises a second portion (Z2) of wall which extends opposite the free end of the said second hollow needle (Aig2) and which is capable of being perforated by the free end of the second hollow needle (Aig2), so as to establish a second path for the drink to flow out of the capsule (C2, C3) via the second hydraulic path (V2) of flow.

3. Assembly according to Claim 2, **characterized in that** the said capsule (C1) comprises a portion of wall (P1) which extends opposite the free end of the second needle (Aig2) of the said two hollow needles (Aig1, Aig2) and which is capable of not being perforated by the free end of this second hollow needle so as to establish no path for the drink to flow out of the capsule via the second hydraulic path (V2) of flow to which the said second hollow needle (Aig2) belongs, or **in that** the said capsule (C2) comprises at least one portion of wall (P2) which extends opposite the free end of the first needle (Aig1) of the said two hollow needles (Aig1, Aig2) and which is capable of not being perforated by the free end of this first hollow needle so as to establish no path for the drink to flow out of the capsule via the first hydraulic path (V1) of flow to which the said first hollow needle (Aig1) belongs.

4. Assembly according to one of Claims 2 or 3, **characterized in that** the first hollow needle (Aig1) and the second hollow needle (Aig2) extend axially from front to rear inside the infusion chamber, **in that** the capsule (C1, C2, C3) comprises a transverse front end wall (50) and **in that** each such portion of wall (Z1, Z2) capable of being perforated is a portion of the said transverse end wall (50).

5. Assembly according to Claim 4, **characterized in that** each such portion of wall (P1, P2) capable of not being perforated is a portion of the said transverse end wall (50) which is formed as a cavity which extends axially from front to rear towards the inside of the capsule (C1, C2, C3).

6. Assembly according to any one of the preceding claims, **characterized in that** the closure piston (3) supports means (36, 37) for taking hold of a capsule (Ci) so as to hold the capsule in the said one-way only position relative to the piston (3) and to move the capsule (Ci) axially from rear to front during the axial closing travel of the chamber (2) by the piston (3).

7. Assembly according to the preceding claim taken in combination with Claim 2, **characterized in that**, in the front axial position of closure of the infusion chamber, the piston (3) encloses a capsule (C1, C2, C3) in the infusion chamber (2), and **in that** at least one of the said portions (Z1, Z2) capable of being perforated is perforated by an associated hollow needle (Aig1, Aig2).

8. Assembly according to Claim 4, **characterized in that** the capsule (Ci) generally has the shape of a truncated cone and is delimited axially towards the front by the said transverse end wall (50) and towards the rear by a transverse front wall (51) which constitutes a face for introduction of the infusion liquid into the capsule (Ci), and **in that** the axis of the frustoconical capsule is parallel to the axis (4) of movement of the piston (3) when the capsule is in the infusion position in the infusion chamber (2).

9. Infusion assembly according to Claim 1, **characterized in that** it comprises pivoting means (19) for controlling the infusion group, and kinematic transformation means (26) capable of transforming a pivoting of the said control means into a relative movement of the piston (3) relative to the chamber (2), along the said axis of translation (4).

10. Infusion assembly according to Claim 1, **characterized in that** the said positioning means are means by cooperation of complementary shapes (21, 9 and 60) comprising a cavity (60) of the capsule (Ci) of which the shape complements that of a protrusion (9) in relief.

11. Assembly according to Claim 10 taken in combination with Claim 4, **characterized in that** the said cavity (60) is formed in the said end wall (50) of the capsule.

12. Infusion assembly according to Claim 10, **characterized in that** it comprises a housing (5) which houses the infusion group, and **in that** the housing comprises a top opening (21) for loading a capsule and a bottom opening (22) for discharging the said capsule.

13. Infusion assembly according to Claim 1, **characterized in that** the said closure piston (3) supports means for taking hold of a capsule.

14. Infusion assembly according to Claim 13, **characterized in that** the said holding means comprise, at two opposite ends of a horizontal diameter of the closure piston, two elastic arms (36) which extend parallel to the said axis of translation (4).

15. Infusion assembly according to Claim 14, **characterized in that** the front end of each arm comprises a jaw (37) for retention and taking hold of a rear edge of a capsule.

16. Infusion assembly according to Claim 15, **characterized in that** each jaw (37) comprises an inclined plane for the release of the locking of the said capsule, and that the said infusion chamber has, on the trajectory of the said inclined plane, a corresponding plane for meeting with the same incline.

17. Capsule capable of being accommodated in a device of an assembly according to any one of the preceding claims, **characterized in that** it comprises a portion capable of comprising a first orifice capable of being connected to the first hydraulic path (V1) of flow of the drink of the said assembly and/or of comprising a second orifice capable of being connected to the second hydraulic path (V2) of flow of the drink of the said assembly,
and **in that** the body of the said capsule is produced by moulding in plastic.

## Patentansprüche

1. Anordnung, die eine Vorrichtung (1) zum Erzeugen eines Aufgusses eines aromatischen Getränks anhand einer Wegwerfkapsel (Ci), die wenigstens eine aufzugießende aromatische Essenz enthält, und wenigstens eine wegwerfbare Kapsel (Ci), wovon ein Abschnitt wenigstens eine Öffnung (T1, T2) für den Austritt des Getränks aus der Kapsel aufweisen kann, enthält, **dadurch gekennzeichnet, dass** die Vorrichtung (1) von dem Typ ist, der enthält:
- eine Aufgussgruppe, die einerseits gebildet ist aus einer Aufgusskammer (2), die eine Kapsel aufnehmen kann, und andererseits aus einem Kolben (3) zum Verschließen der Aufgusskammer, wobei dieser Kolben (3) zwischen einer offenen hinteren axialen Position (AR), die insbesondere die Anordnung einer neuen Kapsel (C1, C2, C3) in der Vorrichtung ermöglicht, und einer vorderen axialen Position (AV), in der die die neue Kapsel enthaltende Kammer (2) geschlossen ist, axial beweglich (4) montiert ist, wobei dieser Kolben (3) die Kapsel in Bezug auf die Aufgusskammer (2) von hinten nach vorn axial verlagern kann, wenn er sich axial bewegt, um die Aufgusskammer (2) zu verschließen;
- Unverwechselbarkeitsmittel (21, 9, 60) zur eindeutigen zwangsläufigen Positionierung der Kapsel (Ci) in der Aufgussposition innerhalb der Aufgusskammer (2);
- einen ersten Hydraulikströmungsweg (V1) des Getränks, der mit einer ersten Öffnung (T1) der Kapsel (C1, C3) durch die Aufgusskammer hindurch verbunden werden kann; und
- einen zweiten Hydraulikströmungsweg (V2) des Getränks, der von dem ersten Hydraulikweg (V1) hydraulisch getrennt ist und mit einer zweiten Öffnung (T2) der Kapsel (C2, C3) durch die Aufgusskammer hindurch verbunden werden kann.

2. Anordnung nach Anspruch 1, **dadurch gekennzeichnet, dass**:
- die Aufgusskammer (2) eine erste Hohlnadel (Aig1) aufweist, die zu dem ersten Hydraulikströmungsweg (V1) gehört und wovon ein freies Ende den Abschnitt (Z1) einer neuen Kapsel (C1, C3) durchlochen kann, um hier eine erste Öffnung (T1) für den Austritt des Getränks aus der Kapsel (C1, C3) zu bewerkstelligen, wenn diese Kapsel durch den Schließkolben (3) in Bezug auf die Aufgusskammer (2) von hinten nach vorn axial verlagert wird;
- die Aufgusskammer (2) eine zweite Hohlnadel (Aig2) enthält, die zu dem zweiten Hydraulikströmungsweg (V2) gehört und wovon das freie Ende den Abschnitt (Z2) einer neuen Kapsel (C2, C3) durchlochen kann, um hier eine zweite Öffnung (T2) für den Austritt des Getränks aus der Kapsel (C2, C3) zu bewerkstelligen, wenn diese Kapsel durch den Schließkolben (3) in Bezug auf die Aufgusskammer (2) axial von hinten nach vorn verlagert wird;
und dass die Kapsel einen ersten Wandabschnitt (Z1) enthält, der sich gegenüber dem freien Ende der ersten Hohlnadel (Aig1) erstreckt und durch das freie Ende dieser ersten Hohlnadel (Aig1) durchlocht werden kann, derart, dass ein erster Strömungsweg für das Getränk aus der Kapsel (C1, C3) durch den ersten Hydraulikströmungsweg (V1) geschaffen wird; und/oder einen zweiten Wandabschnitt (Z2) enthält, der sich gegenüber dem freien Ende der zweiten Hohlnadel (Aig2) erstreckt und durch das freie Ende der zweiten Hohlnadel (Aig2) durchlocht werden kann, derart, dass ein zweiter Strömungsweg des Getränks aus der Kapsel (C2, C3) durch den zweiten Hydraulikströmungsweg (V2) geschaffen wird.

3. Anordnung nach Anspruch 2, **dadurch gekennzeichnet, dass** die Kapsel (C1) einen Wandabschnitt (P1) enthält, der sich gegenüber dem freien Ende der zweiten Hohlnadel (Aig2) der zwei Hohlnadeln (Aig1, Aig2) erstreckt und nicht durch das freie Ende dieser zweiten Hohlnadel durchlocht werden kann, derart, dass kein Strömungsweg des Getränks aus der Kapsel durch den zweiten Hydraulikströmungsweg (V2), zu dem die zweite Hohlnadel (Aig2) gehört, geschaffen wird, oder dass die Kapsel (C2) wenigstens einen Wandabschnitt (P2) enthält, der sich gegenüber dem freien Ende der ersten Hohlnadel (Aig1) der zwei Hohlnadeln (Aig1, Aig2) erstreckt und nicht durch das freie Ende dieser ersten Hohlnadel durchlocht werden kann, derart, dass kein Strömungsweg für das Getränk aus der Kapsel durch den ersten Hydraulikströmungsweg (V1), zu dem die erste Hohlnadel (Aig1) gehört, geschaffen wird.

4. Anordnung nach einem der Ansprüche 2 oder 3, **dadurch gekennzeichnet, dass** sich die erste Hohlnadel (Aig1) und die zweite Hohlnadel (Aig2) in der Aufgusskammer axial von vorn nach hinten erstrecken, dass die Kapsel (C1, C2, C3) eine vordere transversale Bodenwand (50) aufweist und dass jeder genannte Wandabschnitt (Z1, Z2), der durchlocht werden kann, ein Abschnitt der transversalen Bodenwand (50) ist.

5. Anordnung nach Anspruch 4, **dadurch gekennzeichnet, dass** jeder genannte Wandabschnitt (P1, P2), der nicht durchlocht werden kann, ein Abschnitt der transversalen Bodenwand (50) ist, der als ein Topf ausgebildet ist, der sich in der Kapsel (C1, C2, C3) axial von vorn nach hinten erstreckt.

6. Anordnung nach einem der vorhergehenden Ansprüche, **dadurch gekennzeichnet, dass** der Schließkolben (3) Mittel (36, 37) zum Ergreifen einer Kapsel (Ci) trägt, derart, dass die Kapsel in Bezug auf den Kolben (3) in der eindeutigen Position gehalten wird und dass die Kapsel (Ci) axial von hinten nach vorn verlagert wird, wenn sich der Kolben (3) axial bewegt, um die Kammer (2) zu verschließen.

7. Anordnung nach dem vorhergehenden Anspruch in Kombination mit Anspruch 2, **dadurch gekennzeichnet, dass** der Kolben (3) in seiner axial vorderen Position, in der er die Aufgusskammer verschließt, eine Kapsel (C1, C2, C3) in der Aufgusskammer (2) einschließt und dass wenigstens einer der Abschnitt (Z1, Z2), die durchlocht werden können, durch eine zugeordnete Hohlnadel (Aig1, Aig2) durchlocht wird.

8. Anordnung nach Anspruch 4, **dadurch gekennzeichnet, dass** die Kapsel (Ci) als Ganzes die Form eines Kegelstumpfs hat und axial nach vorn durch die transversale Bodenwand (50) und nach hinten durch eine transversale vordere Wand (51), die durch eine Fläche zum Einleiten der Aufgussflüssigkeit in die Kapsel (Ci) gebildet ist, gebildet ist und dass die Längsachse der kegelstumpfförmigen Kapsel zu der Verlagerungsachse (4) des Kolbens (3) parallel ist, wenn sich die Kapsel in der Aufgussposition in der Aufgusskammer (2) befindet.

9. Aufgussanordnung nach Anspruch 1, **dadurch gekennzeichnet, dass** sie Schwenkmittel (19) für die Steuerung der Aufgussgruppe und Mittel (26) zur kinematischen Umwandlung, die eine Schwenkbewegung der Steuermittel in eine relative Verlagerung des Kolbens (3) in Bezug auf die Kammer (2) längs der Translationsachse (4) umwandeln können, enthält.

10. Aufgussanordnung nach Anspruch 1, **dadurch gekennzeichnet, dass** die Positionierungsmittel Mittel sind, die mit komplementären Formen (21, 9 und 60) zusammenwirken und einen Hohlraum (60) der Kapsel (Ci) aufweisen, dessen Form zu jener eines reliefartigen Vorsprungs (9) komplementär ist.

11. Anordnung nach Anspruch 10 in Kombination mit Anspruch 4, **dadurch gekennzeichnet, dass** der Hohlraum (60) in der Bodenwand (50) der Kapsel gebildet ist.

12. Aufgussanordnung nach Anspruch 10, **dadurch gekennzeichnet, dass** sie ein Gehäuse (5) aufweist, in dem die Aufgussgruppe untergebracht ist, und dass das Gehäuse eine obere Öffnung (21) zum Beladen mit einer Kapsel und eine untere Öffnung (22) zum Ausgeben der Kapsel aufweist.

13. Aufgussanordnung nach Anspruch 1, **dadurch gekennzeichnet, dass** der Verschlusskolben (3) Mittel zum Ergreifen einer Kapsel trägt.

14. Aufgussanordnung nach Anspruch 13, **dadurch gekennzeichnet, dass** die Greifmittel an zwei gegenüberliegenden Enden eines horizontalen Durchmessers des Schließkolbens zwei elastische Arme (36) aufweisen, die sich parallel zu der Translationsachse (4) erstrecken.

15. Aufgussanordnung nach Anspruch 14, **dadurch gekennzeichnet, dass** das vordere Ende jedes Arms eine Klemmbacke (37) zum Halten und Ergreifen eines hinteren Randes einer Kapsel aufweist.

16. Aufgussanordnung nach Anspruch 15, **dadurch gekennzeichnet, dass** jede Klemmbacke (37) eine schiefe Ebene aufweist, um die Verriegelung der Kapsel zu lösen, und dass die Aufgusskammer auf der Bahn der schiefen Ebene ein entsprechende Auftreffkammer mit der gleichen Neigung aufweist.

17. Kapsel, die in einer Vorrichtung einer Anordnung nach einem der vorhergehende Ansprüche aufgenommen werden kann, **dadurch gekennzeichnet, dass** sie einen Abschnitt, der eine erste Öffnung aufweisen kann, die mit dem ersten Hydraulikströmungsweg (V1) des Getränks der Anordnung verbunden werden kann, und/oder eine zweite Öffnung aufweisen kann, die mit dem zweiten Hydraulikströmungsweg (V2) des Getränks der Anordnung verbunden werden kann, enthält,
und dass der Körper der Kapsel durch Gießen aus Kunststoff verwirklicht ist.
